# EUROPÄISCHE PATENTANMELDUNG

(11) **EP 2 672 212 A1**
(43) Veröffentlichungstag der Anmeldung: **11.12.2013**
(21) Anmeldenummer: 13450023.0
(22) Anmeldetag: 04.06.2013
(51) Int. Cl.: F27B 1/00, C04B 2/10, C04B 2/12

(54) **Verfahren zum Brennen von Kalk und Schachtringofen zum Durchführen des Verfahrens**

(30) Priorität: 05.06.2012 SI 201200181
(71) Anmelder: Wietersdorfer Industrie-Beteiligungs-GmbH, 9020 Klagenfurt (AT)
(72) Erfinder: Medved, Franc, 1420 Trbovlje (SI); Senegacnik, Andrej, 1000 Ljubljana (SI)
(74) Vertreter: Beer & Partner Patentanwälte KG

(57) **Zusammenfassung**

Ein Schachtringofen (1) zum Brennen von Kalk wird mit einer Kombination aus wenigstens einem fossilen Brennstoff und Holzgas betrieben. Das Holzgas wird in vom Schachtringofen (1) getrennten Holzvergasungsanlagen (21, 22)aus nicht getrockneten und nicht gemahlenen Holzhackschnitzeln erzeugt, wobei die Holzvergasungsanlagen (21, 22) mit aus dem Schachtringofen (1) austretender Kühlluft gespeist werden. Holzgas wird der Verbrennungskammer des Schachtringofens (1) im Bereich von dessen oberem Brenner (15) und von dessen unterem Brenner (7) zugeführt.

## Beschreibung

Die Erfindung betrifft ein Verfahren und einen Schachtringofen zum Brennen von Kalk mit einer Heizung, die durch eine Kombination aus fossilen Brennstoffen und aus Biomasse gewonnenen Brennstoffen betrieben wird.

Aus dem Papier 19th Expert Meeting "KOMUNAL ENERGETIKA / POWER ENGINEERING", Maribor, 2010 ist es bekannt,' Erdgas u. dgl. und Holzgas, das aus einer Holzvergasungsanlage kommt, zu mischen und das so erhaltene Gasgemisch einem unteren Brenner eines Schachtringofens zum Brennen von Kalk zuzuführen. Das synthetische Gas (Holzgas) wird in zwei, dem Schachtringofen vorgelagerten, Holzvergasungsanlagen erzeugt.

Aus dem Papier 20th Expert Meeting "KOMUNAL ENERGETIKA / POWER ENGINEERING", Maribor, 2011 ist es bekannt, das Vergasen von Holz so vorzunehmen, dass dem unteren Brenner eines Schachtringofens eine Holzvergasungsanlage vorgeschaltet ist. Es ist auch erwähnt, Holzvergasungsanlagen dem Schachtringofen vorzuschalten, wenn einem Schachtringofen zum Brennen von Kalk zusätzliche, getrennte Holzvergasungsanlagen zugeordnet sind.

Aus der DE 1 281 111 B ist ein Verfahren zum Brennen von Kalk oder dgl. in einem gas- oder ölbeheizten Schachtofen und ein nach diesem Verfahren arbeitender Schachtofen bekannt. Bei dem bekannten Verfahren zum Brennen von Kalk soll der zu brennende Kalk nacheinander eine Vorwärmzone, eine Brennzone und eine Kühlzone durchwandern.

Aus der DE 1 214 590 B ist ein gas- oder ölbeheizter Schachtofen zum Brennen von Kalkstein, Dolomit oder dgl. bekannt, der mehrere entlang der Brennzone in der Ofenwandung angeordnete Brenngaszuführungsstellen aufweist, wobei eine Kühlluftzuführung am unteren Ofenende vorgesehen ist.

In den bekannten Schachtringöfen, die gasförmige oder flüssige fossile Brennstoffe verwenden, werden die Verbrennungskammern deren Anwendung angepasst. Hier ist insbesondere das Volumen der Verbrennungskammern von Bedeutung, das indirekt auch die maximale Wärmeleistung dieser Kammern bestimmt. Die Brenner verteilen den Brennstoff und bewirken ein gutes Vermischen der Brennstoffe mit Luft. Somit ist ein schnelles und vollständiges Verbrennen bei entsprechender Wärmeleistung des Brenners möglich, die für das Brennen von Kalk erforderlich ist.

Würden bekannten Verbrennungskammern Holzhackschnitzel unmittelbar zugeführt werden, so würden diese in den Verbrennungskammern den Gasdurchfluss stören, nur langsam verbrennen, und die dabei entstehende Asche würde sich mit dem Kalkstein vermischen und die chemische Zusammensetzung und Qualität des gebrannten Kalks verändern. Den bekannten Verbrennungskammern können nur gut verteilbare Brennstoffe zugeführt werden, die eine große aktive Fläche und folglich ein schnelles Verbrennen bzw. eine entsprechende Wärmeleistung ergeben. Es können beispielsweise auch feste zu Korngrößen < 0,3 mm gemahlene Brennstoffe eingeblasen werden. Es sind Schachtringöfen bekannt, die gemahlenen Petrolkoks, Anthrazit und auch trockenes Holzmehl als Brennstoff verwenden.

Die Verwendung von trockenem Holzmehl, wodurch fossile Brennstoffe zur Gänze ersetzt werden könnten, ist aus einem energietechnischen Gesichtspunkt nicht zielführend. Holz muss nämlich zuerst getrocknet und dann noch gemahlen werden. Zum Mahlen von Holz zu Pulver ist viel mechanische Arbeit und Energie erforderlich. Mit dem erhöhten Energieverbrauch und den hohen Investitionskosten für die Anlage zur Herstellung von Holzmehl ist der Vorteil der Mitbenutzung von Holzbiomasse als Brennstoff wieder aufgehoben.

Der Erfindung liegt die Aufgabe zugrunde, die bekannten Verfahren und Anlagen zum Brennen von Kalk so weiter zu bilden, dass zusätzlich zu fossilen Brennstoffen auch aus Biomasse gewonnener Brennstoff verwendet werden kann.

Gelöst wird diese Aufgabe, was das Verfahren betrifft, gemäß der Erfindung mit einem Verfahren, das die Merkmale von Anspruch 1 aufweist.

Insoweit die Anlage betroffen ist, wird die Aufgabe erfindungsgemäß mit einer Anlage gelöst, welche die Merkmale des unabhängigen, auf die Anlage gerichteten Anspruchs aufweist.

Bevorzugte und vorteilhafte Ausgestaltungen des Verfahrens und der Anlage gemäß der Erfindung sind Gegenstand der abhängigen Ansprüche.

Das Ausmaß mit dem Einsparungen fossiler Brennstoffe möglich sind, hängt von der Leistungsfähigkeit der Holzvergasungsanlagen und von dem Heizwert des Holzgases ab. Bestimmende Faktoren sind die Qualität der Holzschnitzel (Wassergehalt) und das Luftverhältnis beim Vergasen. Für das kombinierte Erhitzen ist die Verwendung von wenigstens einer Anlage zum Vergasen von Holzschnitzeln erforderlich. Das von einer Holzvergasungsanlage kommende synthetische Gas (Holzgas) kann den Verbrennungskammern des Schachtringofens in mehreren Brennern gleichzeitig zugeführt werden.

Eine Verbrennungskammer eines Schachtringofens kann auch mit synthetischem Gas (Holzgas), das von zwei (kleineren) Holzvergasungsanlagen zugeführt wird, gespeist werden. Das ist bei geringen Belastungen des Schachtringofens vorteilhaft, da es nicht möglich ist, Holzvergasungsanlagen unter einer bestimmten Leistung zu betreiben. Wenn eine Verbrennungskammer von zwei Holzvergasungsanlagen gespeist wird (beispielsweise jede mit der Hälfte ihrer maximalen Leistung), kann bei geringen Belastungen des Schachtringofens auch nur eine Vergasungsanlage verwendet werden. So kann mit Hilfe des Verfahrens der Erfindung das Ausmaß der Beladung des Schachtringofens in weiten Grenzen gewählt werden.

Es gibt bei bestehenden Schachtringöfen einen Mangel an Raum in Höhe der Verbrennungskammer, weshalb eine neue Plattform für Holzvergasungsanlagen unter der Höhenausrichtung des unteren Brenners der Verbrennungskammer angebaut werden kann.

Auf der neuen Plattform kann die Zahl von Holzvergasungsanlagen üblicherweise gleich der Zahl von Brennern in dieser Höhe gewählt werden.

Das erforderliche, synthetische Gas (Holzgas) wird bevorzugt durch einen glatten und möglichst kurzen Kanal in die Verbrennungskammer eingespeist.

Allfällige Wärmeausdehnungen des Kanals kann durch eine entsprechende Konstruktion Rechnung getragen werden.

Der Kanal sollte thermisch isoliert sein. Das innere Rohr kann aus mehreren Segmenten oder Steinen oder Ziegeln hergestellt sein. Das verwendete Material sollte Temperaturen bis 1300°C aushalten. Das innere Rohr ist mit zusätzlicher thermischer Isolierung versehen und dann außen mit Eisenblech umgeben, das die tragende Konstruktion für das innere Rohr ist. Um im Kanal einen geringen Druckabfall zu erreichen, sollte der Querschnitt des Kanals groß sein. Biegungen im Kanal können in Segmentbauweise ausgeführt werden. Der Kanal sollte Revisions-und Reinigungsöffnungen haben.

Mehr als eine Verbrennungskammer des Schachtringofens kann von einer einzigen Holzvergasungsanlage gespeist werden. Um die Verteilung von Holzgas in der Verbrennungskammer trotz der im Inneren der Kammer herrschenden unterschiedlichen Drücke zu regeln, wird bei einer möglichen Ausführungsform der Erfindung die Strömung von Holzgas zu der Verbrennungskammer gemessen und geregelt.

Da die Temperatur von Holzgas mehr als 1000°C betragen kann, kann als Regelvorrichtung eine größere Kappe verwendet werden, die sich radial in den Kanal bewegt und den Querschnitt desselben verringert , sodass die Strömung an Holzgas verringert ist. Die Kappe sollte genauso temperaturbeständig sein wie das Rohr.

Im Kanal sind mit Vorteil zwei Öffnungen für Druckmessungen vorgesehen, die vor und hinter der Kappe angeordnet sind. Aus dem Unterschied zwischen den gemessenen Drücken kann die Strömung von Holzgas beurteilt werden.

Synthetisches Gas (Holzgas) enthält große Mengen an Kohlenmonoxid und ist sehr heiß und stellt daher eine Gefahr für das Bedienungspersonal des Schachtringofens dar, wenn ein Leck auftritt. Da die gesamte Schachtringofenanlage nicht vollständig gasdicht ist, wird die Anlage bevorzugt mit geringem Unterdruck betrieben.

Im Falle von unvorhergesehenen Ereignissen, wie Ausfall eines Abzuggebläses oder eines Stromausfalls, muss eine sichere Umgebung gewährleistet werden. In solchen Fällen kann die Kaminwirkung (im Schachtringofen entsteht eine Schornsteinwirkung) Druckveränderungen verursachen. In einigen Bereichen kann sich der Druck von negativ zu positiv ändern und den Austritt von Holzgas verursachen. Für solche Fälle ist in Betracht gezogen, an den Kanal, durch den Holzgas strömt, einen Abzug anzuschließen, sodass das Holzgas sicher nach außen abgeführt werden kann. Um zu verhindern, dass bei normalem Betrieb Luft in den Kanal strömt, ist eine Rückschlagklappe am Ende des Abzuges vorgesehen.

Da die Vergasungsanlage einen Überschuss an Kühlluft verbraucht, die bevorzugt über Leitungen zugeführt wird, die an das Kühlsystem des Schachtringofens angeschlossen sind, können Rückströmungen auftreten. Diese sind gefährlich und können durch Rückschlagklappen verhindert werden.

Das synthetische Gas (Holzgas) kann in Holzvergasungsanlagen, die mit Gleichstrom, Gegenstrom oder Querstrom arbeiten, hergestellt werden:

Die für die Erfindung am besten geeignete Bauart ist die Gleichstrombauart, da das hergestellte Holzgas sehr heiß (800° - 1000°C) ist und wenig Teer enthält. Die Menge an Luft, die benötigt wird, um das Holzvergasungsverfahren durchzuführen, hängt von der Art der Vergasungsanlage und der Größe und dem Wassergehalt der Holzschnitzel ab. Die für die Holzvergasungsanlage verwendete Menge an Luft sollte so gering wie möglich sein. Ein Luftverhältnis λ sollte zwischen 0,25 und 0,5 liegen. Das Luftverhältnis λ = tatsächlich zugeführte Luftmenge/stöchiometrisch berechnete Luftmenge.

Um im Inneren des Schachtringofens einen gleichmäßigen Gasstrom aufrecht zu halten, sollte die Summe der entströmenden Luftströme ungefähr die gleiche sein. Die Menge an Kühlluft (tritt ein im Boden des Schachtringofens und kühlt frisch hergestellten, gebrannten Kalk und entzieht dem frisch gebrannten Kalk Wärme, wobei die Luft dann für die Verbrennung vorgewärmt verwendet wird) und die Antriebsluft (für die Ejektoren) kann nicht geändert werden.

Der Eintritt von Luft in die Brenner als Sekundärluft kann verändert werden. Die Sekundärluft verteilt den fossilen Brennstoff (Gas, Öl) innerhalb der Verbrennungskammer und kühlt den oder die Brenner. Daher sollte der Anteil an Sekundärluft nicht unter 10% der geplanten Menge gewählt werden, da sonst die Gefahr eines Überhitzens der Brenner besteht. Die verbleibende Menge (Menge etwa gleich 90% der Sekundärluft) kann für die Holzvergasungsanlagen zur Herstellung von Holzgas verwendet werden. Daraus erkennt man, dass das Herstellen von Holzgas mit dem kleinstmöglichen Luftverhältnis wichtig ist, um maximale Menge an synthetischem Gas (Holzgas) zu erzielen und die Einsparungen an fossilem Brennstoff zu maximieren. Je kleiner das Luftverhältnis in der Holzvergasungsanlage ist, desto mehr Holzschnitzel können anstelle von fossilem Brennstoff verwendet werden.

Der Betrieb mit mehr Luft erhöht den Gesamtgasstrom in dem Schachtringofen. Um die erforderliche Qualität von gebranntem Kalk zu erreichen, sollte der Kalkstein kalziniert werden.

Die Erfindung verwendet zum Kalkbrennen gemäß dem Verfahren der Erfindung einen modifizierten Schachtringofen. Im Bereich des unteren und/oder des oberen Brenners sind vorgelagerte Holzvergasungsanlagen für Holzbiomasse angebaut. Durch die Erfindung ist mit dem Anbau der vorgelagerten Holzvergasungsanlagen die Möglichkeit zur Verwendung von Holzschnitzeln als Brennstoff zum Kalkbrennen in Schachtringöfen, die an sich zur Nutzung von flüssigen oder gasförmigen, fossilen Brennstoffen ausgelegt sind, möglich. Holzbiomasse wird in den vorgelagerten Holzvergasungsanlagen in Holzgas verwandelt und verbrennt teilweise. Die heißen und brennbaren Holzgase werden aus der vorgelagerten Holzvergasungsanlage in die Verbrennungskammer des Schachtringofens eingeleitet, wo diese mit Luft und den fossilen Brennstoffen gemischt werden. In der Verbrennungskammer verbrennt das brennbare Gemisch vollkommen. Dadurch vermindert sich der Einsatz von fossilen Brennstoffen und die Nutzung der erneuerbaren Energieressourcen (Holzbiomasse) wird verbessert.

Mit der Einführung vorgelagerter Holzvergasungsanlagen für Holzbiomasse in Form von Holzschnitzeln - gemäß der Erfindung - wird das Problem erfolgreich gelöst. Die Erfindung ermöglicht das Verwenden von Holzschnitzeln in ihrer ursprünglichen Form; zusätzliches Trocknen und Mahlen, die große Energiemengen verbrauchen, sind nicht mehr erforderlich. Holzschnitzel werden in der vorgelagerten Holzvergasungsanlage in Holzgas verwandelt und partiell verbrannt. Hierbei entsteht in der vorgelagerten Holzvergasungsanlage brennbares Holzgas, das über einen Kanal in die Verbrennungskammer oder zwei Verbrennungskammern eingeführt wird, wo dieses verbrennt.

Die vorgelagerte Holzvergasungsanlage und das Zuleitungsrohr des Holzgases sind wärmegedämmt. Das Holzgas kühlt somit nicht ab.

Das System der vorgelagerten Holzvergasungsanlage und des Zuleitungsrohrs kann als adiabatisches System ausgebildet sein, wodurch sichergestellt wird, dass der Heizwert von Holzschnitzeln zur Gänze ausgenutzt und in die bestehende Verbrennungskammer übertragen wird. Zur Luftzufuhr in die vorgelagerte Holzvergasungsanlage kann Luft aus der Umgebung oder aber überschüssige Kühlluft mit höherer Temperatur zur Anwendung kommen. Die gesamte Energie- und Massenbilanz der vorgelagerten Holzvergasungsanlage und des bestehenden Brenners kann gleich sein. Das bedeutet, dass in jedem Fall, wenn eine kombinierte Heizung mit fossilen Brennstoffen und Holzgas aus Holzbiomasse zum Einsatz kommt, der Gesamtmassenstrom der Rauchgase und die Rauchgastemperatur wie bei der Verwendung von fossilen Brennstoffen allein identisch sein sollen. Auf diese Art werden die entsprechenden technologischen Parameter zum Kalkbrennen in einem Ofen sichergestellt. Durch den Einsatz der vorgelagerten Holzvergasungsanlage für Holzbiomasse gemäß der Erfindung wird Folgendes ermöglicht:
- Minderung des Verbrauch an fossilen Brennstoffen und dadurch Minderung der Umweltbelastung
- Einsatz von Holzschnitzeln zusammen mit fossilen Brennstoffen
- Ausnützen der überschüssigen Kühlluft zur Luftzufuhr in die vorgelagerten Holzvergasungsanlagen und damit verminderte Wärmeverluste bei den Öfen
- geringere Wärmebelastung der bestehenden Verbrennungskammer

Weitere Einzelheiten und Merkmale der Erfindung werden nachstehend an Ausführungsbeispielen beschrieben. Es zeigt:
- Fig. 1: ein Schema eines bekannten Schachtringofens zum Kalkbrennen,
- Fig. 2: ein Schema eines erfindungsgemäßen Schachtringofens,
- Fig. 3: eine Einzelheit des Schachtringofens von Fig. 2 und
- Fig. 4: die Einzelheiten von Fig. 3 im Schnitt.

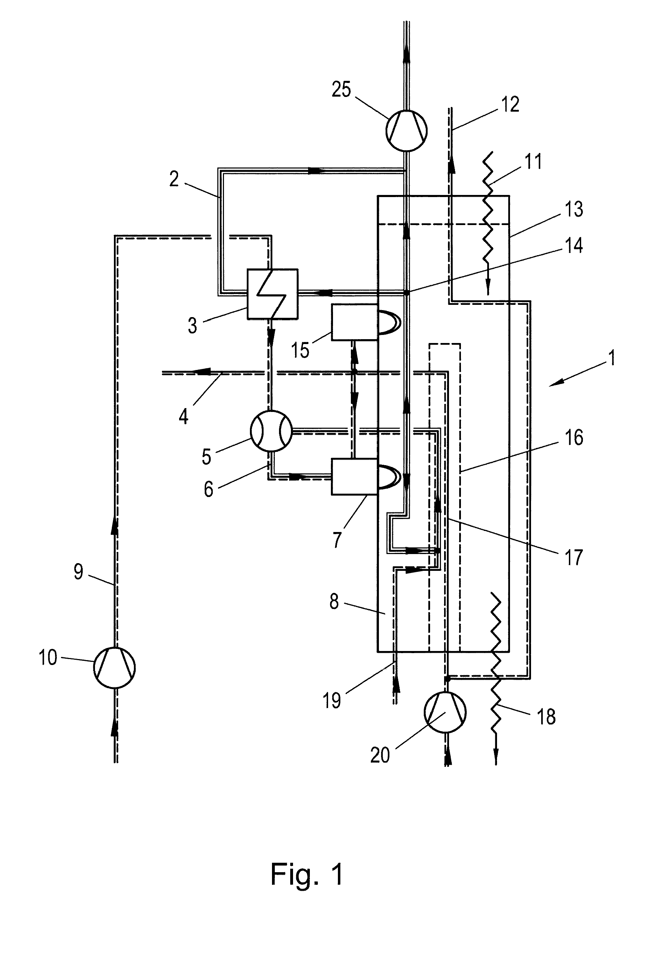

Zunächst wird das in Fig. 1 gezeigte Schema eines bekannten Schachtringofens zum Brennen von Kalk beschrieben.

Das Hauptelement des Schachtringofens 1 zum Brennen von Kalk ist ein vertikaler, zylindrischer Ofen 13 in Turmausführung, mit Innenzylinder 16, unteren Brennern 7 und oberen Brennern 15. Kalkstein 11 in granulierter Stückform mit einer Korngröße von 50 mm bis 150 mm - der Rohstoff wird am oberen Ende ^ (Ofenkopf 12) in den Ofen 13 dosiert aufgegeben und bewegt sich durch den Ofen 13 nach unten an den Brennern 15 und 7 vorbei, wobei der Kalkstein in Folge der hohen Temperatur zwischen 900°C und 1300°C gebrannt wird, sodass gebrannter Kalk und Kohlendioxid entsteht. Gebrannter Kalk 18 wird am Boden aus dem Ofen 13 abgezogen. Der Innenzylinder 16 des Ofens 13 wird mit durch ein Gebläse 20 zugeführter Kühlluft 17 zwangsbelüftet. Kühlluft 17 wird hierbei erwärmt und den Brennern 7 und 15 als Sekundärluft zugeführt. Überschüssige Kühlluft 17 wird in die Umgebung abgeleitet. Ein Teil der Verbrennungsluft wird in den Ofen 13 durch die Schicht 19 aus gebranntem Kalk zugeleitet. Dieser Teil der Verbrennungsluft wird durch einen Ejektor 5 zusammen mit den Ofengasen aus der Konfluenzzone 8 in den Innenzylinder 16 eingesaugt. Luft 9 zum Betreiben des Ejektors 5 wird durch ein Gebläse 10 zugeführt. Die vom Ejektor 5 angesaugten, heißen, rezirkulierten Gase werden im Ejektor 5 mit Luft 6 vermischt, wonach diese in den unteren Brenner 7 bzw. Verbrennungskammer eingeleitet werden, wo noch Brennstoff und Sekundärluft zugeführt werden. Der Brennstoff verbrennt dann in der Verbrennungskammer. Ein Teil der entstehenden Rauchgase im unteren Bereich der Verbrennungskammer bewegt sich nach unten über die Konfluenzzone 8 und ein Teil nach oben in Richtung oberer Brenner 15, wo noch die Rauchgase des oberen Brenners 15 hinzukommen. Sobald die Temperatur der ansteigenden Gase im Bereich der Gabelung 14 der Leitungen unter 700°C absinkt, wird ein Teil der ansteigenden Gase durch den Ofenkopf in einen Rekuperator 3 abgeleitet, wo sie die Luft 9 für den Ejektor 5 vorwärmen. Abgekühlte Gase 2 aus dem Rekuperator 3 werden vor einem Sauggebläse 25 mit den übrigen Gasen aus dem Ofen 13 zusammengeführt. Durch das Sauggebläse 25 werden die Abgase aus dem Ofen 13 in die Umgebung abgeleitet. Der Ofenkopf 12 wird mit der durch das Gebläse 20 zugeführten Luft zwangsgelüftet.

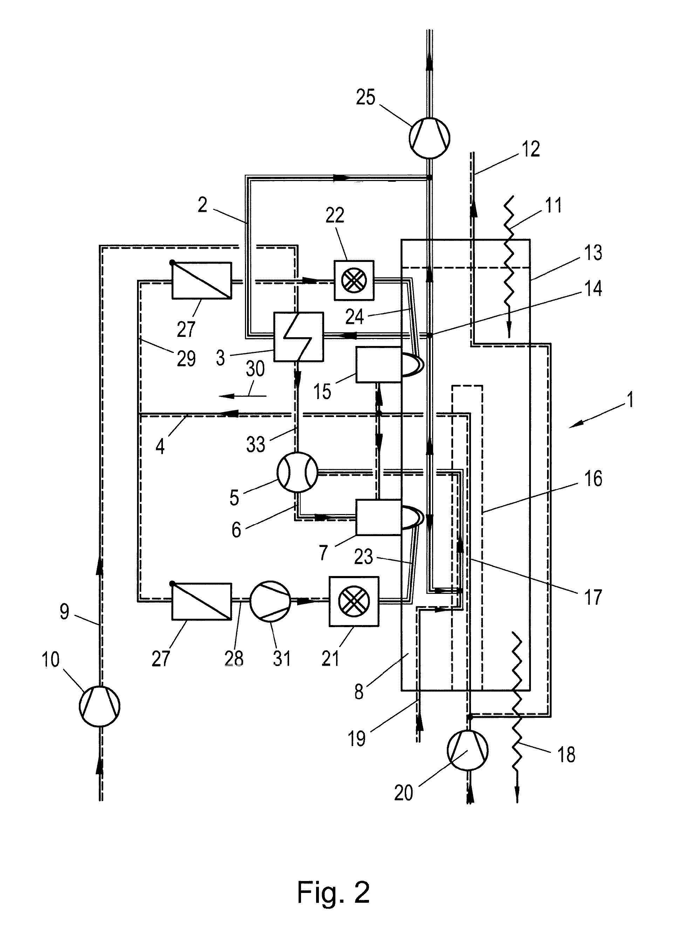

Ein erfindungsgemäß ausgebildeter, in Fig. 2 schematisch dargestellter, Schachtringofen 1 zum Brennen von Kalk umfasst die Bestandteile des Ofens 13 von Fig. 1 und zusätzlich zwei vorgelagerte Holzvergasungsanlagen 21 und 22 in denen Holzhackschnitzel zu Holzgas vergast werden. Die Holzvergasungsanlagen 21 und 22 sind von den Brennern 7 und 15 getrennt angeordnet. Der Abzug von heißem Holzgas aus den vorgelagerten Holzvergasungsanlagen 21 und 22 erfolgt über Anschlusskanäle 23 und 24, die im Bereich der Brenner 7 und 15 in die Verbrennungskammer des Schachtringofens 1 münden. Als Verbrennungsluft für die vorgelagerten Holzvergasungsanlagen kann Luft aus der Umgebung oder aber überschüssige Kühlluft, die bei dem Auslass 4 anfällt, oder eine beliebige Kombination dieser beiden zum Einsatz kommen. In den Leitungen 28 und 29, die vom Auslass 4 zu den Holzvergasungsanlagen 21 und 22 führen, sind Rückschlagklappen 27 vorgesehen, die verhindern, dass Kühlluft/Holzgas zum Auslass 4 zurückströmen kann. Es kann eine beliebige Anzahl an vorgelagerten Holzvergasungsanlagen 21, 22 für das Zuführen von Holzgas im Bereich von jedem Brenner 7 und 15 eingesetzt werden. Wie in Fig. 2 dargestellt, geht von der zum Auslass 4 führenden Leitung eine Leitung 29 aus, die über eine Rückschlagklappe 27 zu der dem Brenner 15 vorgeschalteten Holzvergasungsanlage 22 führt. Von der zum Auslass 4 führenden Leitung geht eine weitere Leitung 28 aus, die über eine weitere Rückschlagklappe 27 und ein Gebläse 31 zu der dem unteren Brenner 7 vorgeschalteten Holzvergasungsanlage 21 führt.

Das Gebläse 31 wird (nur) in Betrieb genommen, wenn der Druck der Kühlluft für deren Verwendung in der Holzvergasungsanlage 21 zu niedrig ist.

Die Verwendung des Gebläses 31 ist somit fakultativ und nicht auf die dem unteren Brenner 7 vorgeschalteten Holzvergasungsanlagen 21 beschränkt.

Insgesamt stehen drei verschiedene Optionen für die Versorgung mit Verbrennungs-/Vergasungs-Luft zur Verfügung, nämlich
- Luft aus der Umgebung,
- zusätzliche Kühlluft,
- zusätzliche Kühlluft (über Gebläse 31) und
- vorgewärmte Luft aus der Leitung 30.

Zusätzlich ist eine Leitung 30 vorgesehen, die von der den Ejektor 5 mit dem Rekuperator 3 verbindenden Leitung 33 ausgeht. Wenn die Leitung 30 vorgesehen ist, durch die Gase (Luft) mit einer Temperatur zwischen 400 und 500°C zu den Leitungen 28 und 29 strömen, kann das Gebläse 31 außer Betrieb genommen werden oder überhaupt entfallen, ohne das Zuführen von vorerhitzter Luft zu den Holzvergasungsanlagen 21 und/oder 22 für das Holzvergasen nachteilig zu beeinträchtigen.

Sämtliche Bestandteile - die vorgelagerte Holzvergasungsanlage 21, 22, die Anschlusskanäle 23, 24, die Zuleitungskanäle der Verbrennungsluft - sind bevorzugt wärmegedämmt. Die Oberflächentemperatur dieser Elemente sollte unter 60°C liegen.

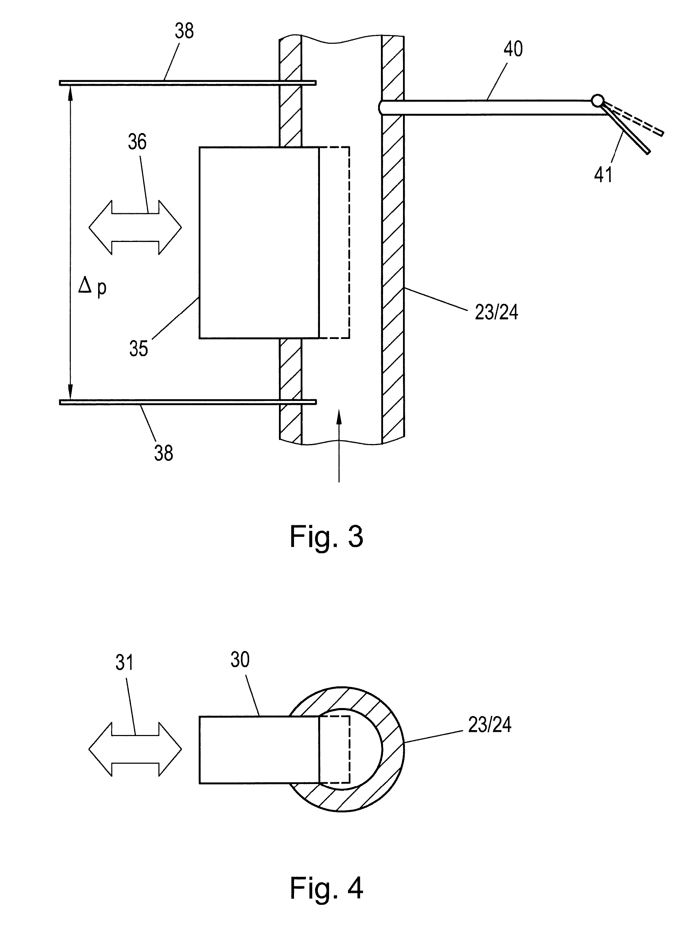

In den Fig. 3 und 4 ist eine bevorzugte Ausführungsform der Anschlusskanäle 23 und 24, über welche die Holzvergasungsanlagen 21 und 22 mit Verbrennungskammern im Bereich der Brenner 7 und 15 verbunden sind, gezeigt. Bei dieser Ausführungsform ist jedem Anschlusskanal 23, 24 eine Kappe 35 (oder ein anderes Regelorgan, wie eine Klappe) zugeordnet, die quer zum Anschlusskanal 23, 24 verstellbar ist (Pfeil 36). So kann durch Verstellen der Kappe 35 und damit durch Verändern des für das Strömen von Holzgas aus den Holzvergasungsanlagen 21 und 22 zur Verfügung stehenden Querschnittes der Anschlusskanäle 23, 24 die Strömung von Holzgas in die Verbrennungskammer des Schachtringofens geregelt werden. Vor und nach der Kappe 35 sind in den Anschlusskanälen 23, 24 Anschlüsse 38 vorgesehen, über die der Druckabfall (Δp) über den mit der Kappe 35 versehenen Bereich der Anschlusskanäle 23, 24 gemessen werden kann.

In Fig. 3 ist noch gezeigt, dass von den Anschlusskanälen 23, 24 ein Abzug 40 ausgeht, an dessen freiem Ende eine Klappe 41 vorgesehen ist, die wenigstens durch ihr Eigengewicht in ihre den Abzug 40 verschließende Stellung belastet ist. So wirkt die Klappe 41 als Sicherheitsventil.

Zusammenfassend kann ein Ausführungsbeispiel der Erfindung wie folgt beschrieben werden.

Ein Schachtringofen zum Brennen von Kalk wird mit einer Kombination aus wenigstens einem fossilen Brennstoff und Holzgas betrieben. Das Holzgas wird in vom Schachtringofen getrennten Holzvergasungsanlagen 21, 22 aus nicht getrockneten und nicht gemahlenen Holzhackschnitzeln erzeugt, wobei die Holzvergasungsanlagen 21, 22 mit aus dem Schachtringofen austretender Kühlluft gespeist werden. Holzgas wird der Verbrennungskammer des Schachtringofens im Bereich von dessen oberem Brenner 15 und von dessen unterem Brenner 7 zugeführt.

## Patentansprüche

1. Verfahren zum Brennen von Kalk in einem Schachtringofen (1), wobei in wenigstens einer mit wenigstens einem Brenner (15, 16) ausgestatteten Verbrennungskammer ein Gemisch aus fossilem Brennstoffen und Holzgas verbrannt wird, wobei das Holzgas aus einer vorgelagerten Holzvergasungsanlage (21, 22) zugeführt wird, **dadurch gekennzeichnet, dass** das Holzgas aus der wenigstens einen Holzvergasungsanlage (21, 22) über eine gesonderte Leitung (23, 24) unmittelbar in die wenigstens eine Verbrennungskammer im Schachtringofen (1) geleitet wird.

2. Verfahren nach Anspruch 1 ist **dadurch gekennzeichnet, dass** der wenigstens einen Holzvergasungsanlage (21, 22) zum Vergasen von Holzbiomasse mit dem Ziel Holzgas herzustellen, aus dem Schachtringofen (1) aus dem Auslass (4) austretende, überschüssige Kühlluft und/oder vorerhitzte Luft als Verbrennungsluft für das Betreiben der Holzvergasungsanlage zugeführt wird.

3. Verfahren nach einem der Ansprüche 1 oder 2, **dadurch gekennzeichnet, dass** in der wenigstens einen Holzvergasungsanlage (21, 22) die Holzbiomasse partiell verbrannt und vollständig vergast wird, wobei das Verbrennen von Holzgas in der wenigstens einen Verbrennungskammer beendet wird.

4. Verfahren nach Anspruch 3, **dadurch gekennzeichnet, dass** das aus der vorgeschalteten Holzvergasungsanlage (21, 22) kommende Holzgas mit erhöhter Temperatur, insbesondere tangential, in die wenigstens eine Verbrennungskammer eingeleitet wird.

5. Verfahren nach einem der Ansprüche 1 bis 4, **dadurch gekennzeichnet, dass** in der Holzvergasungsanlage (21, 22) ein Luftverhältnis λ von 0,25 und 0,50 eingehalten wird.

6. Verfahren nach einem der Ansprüche 1 bis 5, **dadurch gekennzeichnet, dass** in der Holzvergasungsanlage (21, 22) als Holzbiomasse Holzschnitzel ohne vorheriges Trocknen und Mahlen dem Vergasungsprozess unterzogen werden.

7. Verfahren nach einem der Ansprüche 1 bis 6, **dadurch gekennzeichnet, dass** Holzgas aus mehr als einer Holzvergasungsanlage (21, 22) in die wenigstens eine Verbrennungskammer zugeführt wird.

8. Verfahren nach einem der Ansprüche 1 bis 7, **dadurch gekennzeichnet, dass** Holzgas aus einer Holzvergasungsanlage (21, 22) in zwei Brennkammern, nämlich eine untere Brennkammer und eine obere Brennkammer des Schachtringofens zugeführt wird.

9. Verfahren nach einem der Ansprüche 1 bis 8, **dadurch gekennzeichnet, dass** die Zufuhr von Holzgas aus der Holzvergasungsanlage (21, 22) in die Brennkammer mit Hilfe eines der Leitung (23, 24) zugeordneten Regelorganes (35) in Abhängigkeit vom Druckabfall (Δp) über das Regelorgan (35) geregelt wird.

10. Verfahren nach einem der Ansprüche 1 bis 9, **dadurch gekennzeichnet, dass** Holzgas aus wenigstens einer Holzvergasungsanlage (21, 22) der Verbrennungskammer des Schachtringofens einerseits im Bereich eines oberen Brenners (15) und andererseits im Bereich eines unteren Brenners (7) zugeführt wird.

11. Schachtringofen (1) zum Ausführen des Verfahrens nach einem der Ansprüche 1 bis 10 mit wenigstens einer Verbrennungskammer, der wenigstens ein Brenner (7, 15) zugeordnet ist und einer vorgelagerten Holzvergasungsanlage (21, 22), **dadurch gekennzeichnet, dass** die wenigstens eine Holzvergasungsanlage (21, 22) vom Schachtringofen (1) getrennt angeordnet ist.

12. Schachtringofen nach Anspruch 11, **dadurch gekennzeichnet, dass** von der wenigstens einen Holzvergasungsanlage (21, 22) eine Leitung (23, 24) unmittelbar in die Verbrennungskammer des Schachtringofens (1) führt.

13. Schachtringofen nach Anspruch 11 oder 12, **dadurch gekennzeichnet, dass** die Leitungen (23, 24) feuerfest ausgekleidet und thermisch isoliert sind.

14. Schachtringofen nach einem der Ansprüche 11 bis 13, **dadurch gekennzeichnet, dass** eine Holzvergasungsanlage (21, 22) zwei Verbrennungskammern des Schachtringofens (1) zugeordnet ist.

15. Schachtringofen nach einem der Ansprüche 11 bis 14, **dadurch gekennzeichnet, dass** jeder Verbrennungskammer des Schachtringofens (1) zwei Holzvergasungsanlagen (21, 22) zugeordnet sind.

16. Schachtringofen nach einem der Ansprüche 11 bis 15, **dadurch gekennzeichnet, dass** der Leitung (23, 24), welche die Holzvergasungsanlage (21, 22) mit der Verbrennungskammer verbindet, ein Regelorgan (35), insbesondere ein Regelorgan in Form einer quer zur Leitung (23, 24) verstellbaren Kappe oder Klappe, zugeordnet ist.

17. Schachtringofen nach einem der Ansprüche 11 bis 16, **dadurch gekennzeichnet, dass** vor und nach dem Regelorgan (35) Anschlussstellen (38) für das Messen des Druckabfalls (Δp) über das Regelorgan (35) vorgesehen sind.

18. Schachtringofen nach einem der Ansprüche 11 bis 17, **dadurch gekennzeichnet, dass** im Anschlusskanal (23, 24), über welche die Holzvergasungsanlage (21, 22) mit der Verbrennungskammer verbunden ist, ein Abzug (405) ausgeht, an dessen freiem Ende eine als Sicherheitsventil wirkende Klappe (41) vorgesehen ist.

19. Schachtringofen nach einem der Ansprüche 11 bis 18, **dadurch gekennzeichnet, dass** die Leitung (23, 24), über welche Holzgas aus der Holzvergasungsanlage (21, 22) in die Verbrennungskammer eingeführt wird, in die Verbrennungskammer im Wesentlichen tangential einmündet.

20. Schachtringofen nach einem der Ansprüche 11 bis 19, **dadurch gekennzeichnet, dass** die wenigstens eine Holzvergasungsanlage (21, 22) über eine Leitung (23, 24)in die Verbrennungskammer im Bereich des oberen Brenners (15) einerseits und des unteren Brenners (7) andererseits mündet.

21. Schachtringofen nach einem der Ansprüche 11 bis 20, **dadurch gekennzeichnet, dass** Leitungen (28, 29) vorgesehen sind, die vom Auslass (4) der über eine Leitung (17) überschüssige, aus dem Schachtringofen (1) kommende Kühlluft zugeführt wird, ausgehen und zu den Holzvergasungsanlagen (21, 22) führen.

22. Schachtringofen nach Anspruch 21, **dadurch gekennzeichnet, dass** in den Leitungen (28, 29) Rückschlagklappen (27) vorgesehen sind.

23. Schachtringofen nach Anspruch 21 oder 22, **dadurch gekennzeichnet, dass** wenigstens in einer der Leitungen (28,29) ein Gebläse (31) vorgesehen ist.

24. Schachtringofen nach Anspruch 21 oder 22, **dadurch gekennzeichnet, dass** vor der den Ejektor (5) mit dem Rekuperator (3) verbindenden Leitung (33) eine Leitung (30) ausgeht, die in wenigstens eine der Leitungen (28 und 29) mündet.
